# EUROPEAN PATENT APPLICATION

(11) **EP 2 674 689 A1**
(43) Date of publication of application: **18.12.2013**
(21) Application number: 13171834.8
(22) Date of filing: 13.06.2013
(51) Int. Cl.: F24F 13/08, F24D 17/02

(54) **Improvement in a thermodynamic water heating system**

(30) Priority: 15.06.2012 ES 201230943
(71) Applicant: Soler & Palau Research, S.L., 08150 Parets del Vallés (Barcelona) (ES)
(72) Inventor: Bach-Esteve Burch, Albert, 08150 PARETS DEL VALLÉS (BARCELONA) (ES)
(74) Representative: Intès, Didier Gérard André

(57) **Abstract**

The present invention relates to an improvement in a thermodynamic water heating system, comprising a heat pump (1) included between an inlet (6) and an outlet (7) for circulating an airflow carrying residual heat originating from another system, including a filter (9) for cleaning the circulating air, a path (14) for circulating the air directly from the inlet (6) to the outlet (7) without passing through the filter (9) being established in parallel to the path for the passage of the air through the heat pump (1), in which path (14) an operative closure is included by means of a gate (15) closing and opening the air passage through this path (14) as well as activating and deactivating the operation of the thermodynamic system of application.

## Description

### Field of the Art

The present invention relates to heating water for applications such as consumption or heating, proposing an improvement over a conventional thermodynamic water heating system, whereby features reducing the need for system maintenance and improving system efficiency are provided.

### State of the Art

Water heaters are devices intended for raising water temperature and are domestically used for supplying hot sanitary water or for heating the water of heating circuits.

The water is conventionally heated by means of electric resistances or by means of using fuels such as butane, propane or fuel oil, these systems being applied in tankless water heaters which heat the water as it circulates through a coil, and in storage water heaters which heat the water inside a tank to subsequently supply the hot water from said heating tank.

Tankless water heaters provide hot water in a quick and continuous manner but entail a high energy cost; meanwhile storage water heaters require a longer heating time and the temperature of the hot water that they provide is not constant, however, they allow a greater efficiency in energy exploitation efficiency and therefore a lower cost.

Water heating systems which allow minimizing the energy cost by using renewable energies, such as solar energy or wind energy, and by harnessing the residual heat from other systems which is usually given off into the atmosphere, are also known.

In this sense, a known system of exploiting residual heat for water heating is the use of the heat dissipated by the building climate control system (heating, ventilation or air conditioning), where said residual heat aids the function of a thermodynamic system which heats the water of a tank by means of a heat pump; whereby heat which would otherwise be discharged directly into the atmosphere, its energy being wasted and generating an environmentally damaging emission, is productively exploited.

Such systems have a filter to prevent that dirt in the air transporting the residual heat enters the components of the thermodynamic system so that when the climate control system from which the residual heat is taken works continuously or for a very long time, the supply of air carrying residual heat to the thermodynamic system is constant, even during time periods when said thermodynamic system is not working due to an automatic shutdown depending on the temperature of the water to be heated, whereby the filter arranged in the thermodynamic system is quickly saturated with dirt, making the passage of air difficult and increasing the consumption of the fan which drives the air circulation, frequent cleaning or replacement of said filter thus being necessary.

### Object of the Invention

The present invention proposes an improvement in a thermodynamic water heating system, whereby the residual heat from a climate control system, for example, is exploited, optimizing the use of an air pass filter for filtering the air transporting residual heat, leading to an improvement in the system yield and a reduction in the maintenance needed therein.

The thermodynamic water heating system in which the object of the invention is applied comprises a heat pump heating water contained in a tank, said heat pump being arranged between an inlet and an outlet for the air originating from the residual heat supplying system, between which the air carrying residual heat circulates through a path passing through the heat pump, a filter for cleaning the air being arranged in said path.

According to the invention, in parallel to the path for the passage of the air carrying residual heat through the heat pump, a path for direct passage between the inlet and the outlet is determined, in which there is arranged an opening and closing gate , which gate acts in combination with the activation and deactivation of the operation of the thermodynamic system of application, closing said path for direct passage when the thermodynamic system is activated and opening the passage when said thermodynamic system is deactivated.

Therefore when the thermodynamic water heating system is operating, the residual heat originating from the related system, such as the climate control system of the building itself, is exploited in the heat pump thereof, said residual heat being used to aid the function of the heat pump.

In this case, the air carrying residual heat circulates through the path in which the heat pump is located, passing through the filter arranged in said path, such that the suspended airborne dirt particles are retained by the filter, the heat pump thus being protected from that dirt.

However, when the thermodynamic system is deactivated, the path for direct passage of the air between the inlet and the outlet opens, whereby the air carrying residual heat does not pass through the filter arranged to protect the heat pump from the dirt.

Hence, the air carrying residual heat harnessed in the thermodynamic system only passes through the filter protecting the heat pump from the dirt when the thermodynamic system is operating, whereas when said system is deactivated, the dirty air carrying residual heat does not pass through the filter, being discharged to the outside directly, so dirt accumulation in the filter is considerably reduced, prolonging its service life and improving system efficiency.

Due to the foregoing, the object of the invention has very advantageous features, acquiring its own identity and preferred character for the function of exploiting residual heat originating from another system in a thermodynamic water heating system.

### Description of the Drawings

Figure 1 shows a diagram of a home provided with a climate control system and a system for exploiting the residual heat from that system in a thermodynamic water heating system.
Figure 2 shows an enlarged diagram of the thermodynamic water heating system of the preceding figure.
Figures 3 and 4 show respective diagrams of the arrangement of the improvement of the invention in relation to a thermodynamic water heating system, in the first the path for direct passage of the air carrying residual heat being closed and in the second case said path for direct passage of the air carrying residual heat being opened.

### Detailed Description of the Invention

The object of the invention relates to an improvement which is applied in a thermodynamic water heating system that harnesses the residual heat originating from another system, for example, a climate control system, providing features which improve functional efficiency and reduce maintenance.

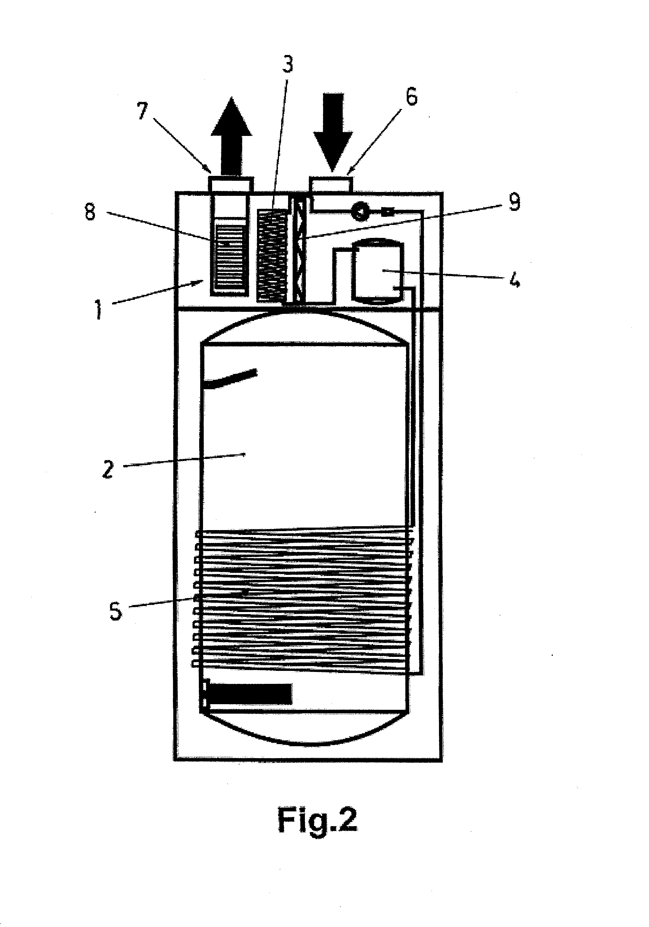

According to one embodiment (Figure 2), the thermodynamic system of application of the invention comprises a heat pump (1) heating the water of a tank (2), the heat pump (1) comprising an evaporator (3) and a compressor (4) connected to a condenser (5) which is arranged in connection with the tank (2), the evaporator (3) being arranged in a passage for air circulation between an inlet (6) and an outlet (7), where the air is driven by a fan (8), a filter (9) retaining the airborne dirt particles being arranged in front of the evaporator (3).

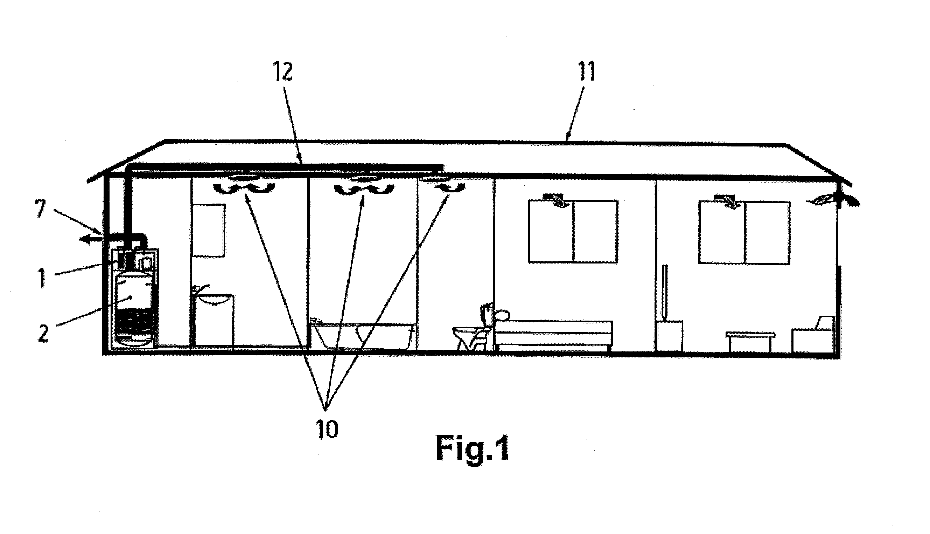

As shown in Figure 1, said thermodynamic system can, for example, be connected to the climate control system (10) of the building or home (11) where both systems are located, connecting the air discharge conduit (12) of said climate control system (10) to the inlet (6) of the thermodynamic system, whereas the outlet (7) of this thermodynamic system (Figures 1 and 2) is arranged for discharging to the outside of the building or dwelling (11).

The air carrying the residual heat from the climate control system (10) thus passes through the evaporator (3) of the heat pump (1) of the thermodynamic system, said residual heat being harnessed to aid in the heating function that the thermodynamic system must perform.

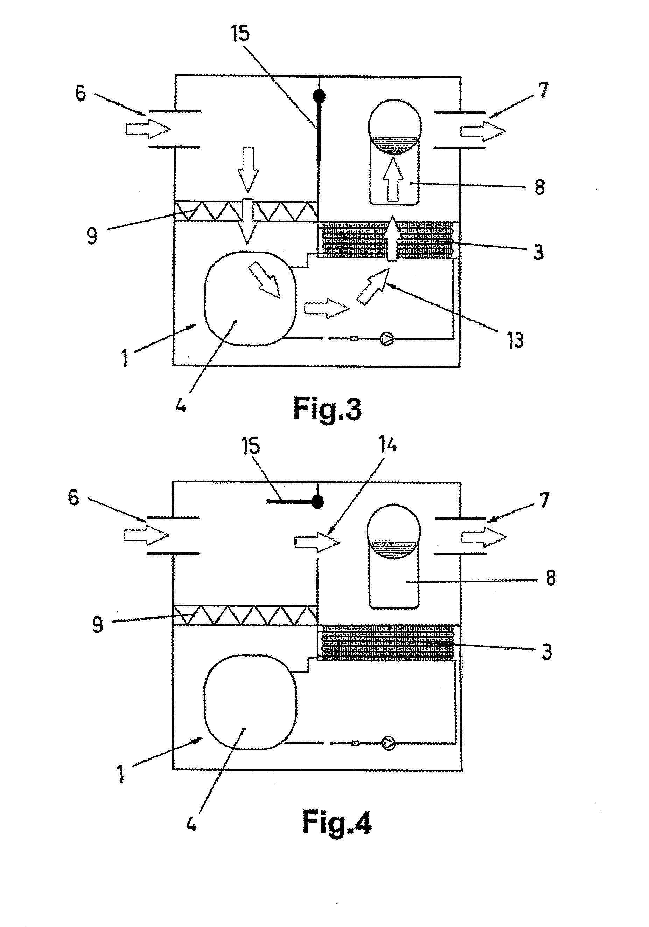

According to the invention, as observed in Figures 3 and 4, a path (13) for circulating the air passing through the evaporator (3) of the heat pump (1), passing previously through the filter (9) for cleaning the air, is established between the inlet (6) and the outlet (7) of the air passage in the thermodynamic water heating system, and another path (14) going directly from the inlet (6) to the outlet (7) is established in parallel to that path (13), an operative closure being established in this path (14) by means of a gate (15) closing and opening the passage in combination with the activation and deactivation of the operation of the thermodynamic system.

Therefore, when the thermodynamic system is operating, the gate (15) closes the passage through the path (14), whereby the air carrying the residual heat from the climate control system (10) circulates through the path (13), passing through the filter (9) and the evaporator (3), such that the residual heat carried by the circulating air is harnessed to aid the function of the thermodynamic system.

However, when the operation of the thermodynamic system is deactivated, usually when the water being heated reaches a specific temperature, the gate (15) changes position, leaving the path (14) open, whereby the air carrying the residual heat originating from the climate control system (10) circulates through said path (14) directly from the inlet (6) to the outlet (7), such that in this situation the air carrying residual heat and contaminated with dirt does not pass through the filter (9), therefore considerably reducing dirt accumulation in said filter (9), and accordingly the need for cleaning maintenance and/or replacement thereof, as well as the difficulty for the passage of air when it circulates through the path (13), causing the fan (8) to work more, compelling greater energy consumption.

## Claims

1. An thermodynamic water heating system, comprising a heat pump (1) through which a passage for the airflow carrying residual heat from another system such as a climate control system is established between an inlet (6) and an outlet (7), said residual heat originating, including a filter (9) for cleaning the air in said passage for the air carrying residual through the heat pump (1), **characterized in that** a first path (13) for circulating the air passing through the filter (9) and the heat pump (1) is established between the inlet (6) and the outlet (7) for the passage of air carrying residual heat, and a second path (14) going directly from the inlet (6) to the outlet (7) without passing through the filter (9) and the heat pump (1) is established in parallel to said first path (13), an operative closure being established in this second path (14) by means of a gate (15) for closing and opening the passage through said second path (14) in combination with the activation and deactivation of the operation of the thermodynamic system of application.

2. The thermodynamic water heating system according to claim 1, **characterized in that** the gate (15) is located in a position for closing the corresponding second path (14) when the thermodynamic system of application is operating, changing to the position for opening said second path (14) when the thermodynamic system of application stops operating.
